# EUROPEAN PATENT SPECIFICATION

(11) **EP 0 391 275 B1**
(45) Date of publication and mention of the grant of the patent: **03.05.1995**
(21) Application number: 90106133.3
(22) Date of filing: 30.03.1990
(51) Int. Cl.: C08L 101/00, C08L 25/00

(54) **Novel flame-retardant enhancing composition**
Zusammensetzung zur Erhöhung der flammhemmenden Wirkung
Composition pour augmenter l'effet retardateur de flamme

(30) Priority: 05.04.1989 IL 89855
(43) Date of publication of application: 10.10.1990
(73) Proprietor: Bromine Compounds Ltd., Beer-Sheva 84101 (IL)
(72) Inventor: Utevskii, Lev E., Beer-Sheva 84751 (IL); Reznik-Vaks, Evgenia M., Beer-Sheva 84756 (IL); Peled, Michael, Beer-Sheva (IL)
(74) Representative: Perani, Aurelio

(56) References cited:
- FR-A- 2 267 337
- LU-A- 51 593
- US-A- 4 259 230
- US-A- 4 401 783

## Description

### Field of The Invention

The present invention relates to the use of EPDM to enhance the flame retardancy of flammable polymers.

### Background of The Invention

Ethylene, propylene, diene monomer is the basis for the terpolymer elastomer which is normally known as EPDM, and which will be so called hereinafter for the sake of brevity. EPDM, as said, is an elastomer based on stereospecific linear terpolymers of ethylene, propylene and small amounts of a non-conjugated diene, e.g., cyclic or aliphatic diene such as hexadiene, dicyclopentadiene, or ethylidene norbornene.
It is known from FR-A-2 267 337 that EPDM may be included within master-batch compositions containing flame retardant additives and suitable to be incorporated into polymer resins.
US-A-4 401 783 discloses flame retardant compositions containing a thermoplastic olefinic resin and a fully vulcanized olefinic rubber (i.a. EPDM), the latter comprising flame retardant additives.
EPDM is known to be per se highly flammable.

### SUMMARY OF THE INVENTION

It has now been surprinsingly found, and this is an object of the present invention, that the addition of this flammable material in small amounts to another polymer containing a flame-retardant material, has the effect of improving the flame retardancy of the resulting composition. This indeed is totally unexpected as improvement of flame retardant properties has been observed in consequence of the addition of materials which are flammable by themselves.

Therefore, in accordance with the present invention, there is described the use of EPDM as a flame retardant synergistic compound for improving the flame retardancy of a polymer other than an ethylene-propylene-diene terpolymer, containing flame retardant additives.
The invention can be usefully exploited in a variety of polymers, such as styrenic polymers and copolymers, e.g., acrylonitrile-butadiene-styrene, high-impact polystyrene, styrene-acrylonitrile, polystyrene or styrene-butadiene rubber.

The invention further relates to the use of EPDM for improving the flame retardant properties of a polymer other than an ethylene-propylene-diene terpolymer, containing flame retardant additives, which use involving adding to said polymer a composition which comprises an ethylene-propylene diene terpolymer.

Also encompassed by the present invention is the use of an ethylene-propylene-diene terpolymer for restoring flame retardant properties to a polymer other than an ethylene-propylene-diene terpolymer containing flame retardant and non-flame retardant additives, and the flame retardancy of which has been adversely affected by the addition of one or more additives, which use comprises adding to such a polymer an ethylene-propylene diene terpolymer.

Such a use is particularly useful in improving the flame retardant properties of useful styrene-based resins, such as high-impact polystyrene (HIPS) and acrylonitrile-butadiene-styrene (ABS).
The above described use of EPDM is particularly convenient when the flame retardant additive used in HIPS is hexabromocyclododecane. Other suitable flame-retardant additives will be recognized by persons skilled in the art and may comprise, e.g., Tetrabromobisphenol A (TBBA), pentabromobenzyl-acrylate and methacrylate, poly(pentabromobenzyl-acrylate), tribromostyrene, tribromophenylmaleimide, BC-58 (Phenoxy-terminated TBBA carbonate oligomer, ex Great Lakes), F.G. 7000 (TBBA carbonate oligomer, ex Teijin), polybrominated-diphenyl ethers, such as Octa or Decabromodiphenyl ether, etc.

Restoring flame retardancy is further conveniently done when this property has been adversely affected by the addition of heat stabilisers such as organotin compounds, glycidyl ethers, phosphorus compounds, esters of phosphorus acid and their mixtures.

### DETAILED DESCRIPTION OF THE INVENTION

The above and other characteristics and advantages of the invention will now be illustrated with reference to the following examples,. which are not intende to limit the invention but merely to illustrate it.

### Example 1

Formulations containing ABS as the base polymer and either OCTA (octabromodiphenylether - ex Bromine Compounds Ltd.) or FF-680 (1,2-bis(2,4,6-tribromo phenoxy) ethane, ex Great Lakes Chemical Corporation) were prepared in a Co-Kneader MDK-46 BUSS) at 170-230°C. Specimens were prepared by injection molding in an Allrounder 221-75-350 (ARBURG) at 190-250°C. Flamability tests were carried out in all cases according to the UL-94 test. Results are shown in Table I. It is clearly seen from the results that addition of 5% EPDM permitted to maintain a VO rating while reducing the OCTA content from 21.8% to 15.9%. In comparison, a composition which contains 20.5% OCTA (slightly below the amount required for VO rating), but which does not contain EPDM, was non-rated.

Similarly, it was possible to reduce the content of FF-680 from 21.4% to 13.6%, by adding 5% EPDM, and to maintain the VO rating, while 20% FF-680 were not sufficient to reach VO rating in the absence of EPDM.

### Example 2

High-Impact Polystyrene (Vestyron 638, ex Huels) was formulated in a laboratory twin-screw extruder (Brabender) at 150-210°C and specimens were prepared by injection-molding at 210-240°C in an Allrounder 221-75-30 (ARBURG). The results are shown in Tables II and III.

In Table II there is seen that HIPS made flame-retardant with HBCD (hexabromocyclododecane) was non-rated, and became V2 with the addition of as little as 0.5% EPDM.

In Table III there is seen a further rating upgrade caused by EPDM, in which a HIPS composition made flame-retardant by a combination of HBCD and antimony oxide was upgraded from V2 to V0 by the addition of 1% EPDM.

The thermal stabilizer employed was chosen from organotin compounds, e.g. Mixxim T-18, or a glycidyl ether. As seen in Table II, there is virtually no color change (DE) and the color of the polymer remains constant.

### Example 3

Six different formulations were tested to evaluate the behaviour of different types of EPDM. The formulations were based on HIPS, and the flame-retardant employed was HBCD. The specimens were prepared by processing in a Brabender at 240°C for 3-4 minutes.

The results are detailed in Table IV below. No differences are seen between the various EPDMs, other than expectable experimental fluctuations.

The above description and examples have been given for the purpose of illustration and are not intended to be limitative. Many different applications of the use described in the invention can be made, as will be apparent to the skilled person, without exceeding the scope of the invention.

**Table I**

| Effect of EPDM on ABS containing OCTA or FF-680 | | | | | | | |
|---|---|---|---|---|---|---|---|
| Kind of flame retardant: | | Octa ex BCL | | | FF-680 ex GLCC | | |
| **components,** % | | | | | | | |
| ABS ex DSM Ronfalin TZ-110 | | 67.0 | 65.0 | 69.2 | 68.9 | 66.8 | 73.9 |
| Flame Retardant | | 20.5 | 21.8 | 15.9 | 20.0 | 21.4 | 13.6 |
| AO ex Campine Antiox Blue Star "RG" | | 11.4 | 12.1 | 8.8 | 10.0 | 10.7 | 6.8 |
| Mg-stearate ex Witco | | 0.3 | 0.3 | 0.3 | 0.3 | 0.3 | 0.2 |
| Irganox B 225 ex Ciba Geigy | | 0.1 | 0.1 | 0.1 | 0.1 | 0.1 | 0.1 |
| Irgawax 280 ex Ciba Geigy | | 0.3 | 0.3 | 0.3 | 0.3 | 0.3 | 0.2 |
| Tinuvin P ex Ciba Geigy | | 0.2 | 0.2 | 0.2 | 0.2 | 0.2 | 0.2 |
| Tinuvin 770 ex Ciba Geigy | | 0.2 | 0.2 | 0.2 | 0.2 | 0.2 | 0.2 |
| EPDM ex Esso Vistalon 3708 | | - | - | 5.0 | - | - | 5.0 |
| Bromine | | 16.0 | 17.0 | 12.35 | 14.0 | 15.0 | 9.5 |
| UL-94 1.6 mm | max. flaming time, sec. | 56 | 1 | 3 | 115 | 1 | 0 |
| | total flaming time, sec. | 62 | 3 | 6 | 236 | 5 | 0 |
| | number of drops igniting cotton | 0 | 0 | 0 | 2 | 0 | 0 |
| | rating | NR | VO | VO | NR | VO | VO |

**Table II**

| Effect of EPDM on HIPS | | | | |
|---|---|---|---|---|
| | | **Formulation** | | |
| **Components**% | | A | B | C |
| HIPS Vestyron 638 ex Huels | | 100 | 96.5 | 96.0 |
| HBCD ex BCL | | - | 3.0 | 3.0 |
| EPDM ex Esso Vistalon 3708 | | - | - | 0.5 |
| Thermal Stabilizer | | | 0.5 | 0.5 |
| Mg-stearate ex Witco | | - | - | - |
| Maleic anhydride | | - | - | - |
| Bromine % | | - | 2.2 | 2.2 |
| UL-94 3.2 mm | total flaming time, sec. | burns up to the clamps | burns up to the clamps | 64 |
| | max. flaming time, sec. | burns up to the clamps | burns up to the clamps | 28 |
| | number of spec. igniting cotton | 5 | 5 | 5 |
| | rating | NR | NR | V2 |
| DE | | 40.8 | 41.0 | 41.0 |

**Table III**

| Effect of EPDM on HIPS with added Antimony Oxide | | | |
|---|---|---|---|
| | | **Formulation** | |
| **Components** % | | D | E |
| HIPS Vestyron 638 ex Huls | | 75.3 | 74.3 |
| AO ex Campine Antiox White Star "RG" | | 7.3 | 7.3 |
| HBCD ex BCL Lot no. 86 | | 16.1 | 16.1 |
| EPDM ex Esso Vistalon 3708 | | - | 1.0 |
| Mixxim T-18 ex Fairmount | | 0.2 | 0.2 |
| Thermal Stabilizer | | 0.5 | 0.5 |
| Mg-stearate ex Witco | | 0.5 | 0.5 |
| Maleic anhydride | | 0.1 | 0.1 |
| Bromine | | 12 | 12 |
| UL-94 3.2 mm | total flaming time, sec. | 12 | 30 |
| | max. flaming time, sec. | 4 | 8 |
| | number of spec. igniting cotton | 3 | 0 |
| | rating | V2 | V0 |

**Table IV**

| Use of Different EPDMs | | | | | | | |
|---|---|---|---|---|---|---|---|
| | | Formulation | | | | | |
| Component | | 1 | 2 | 3 | 4 | 5 | 6 |
| HIPS Vestyron 638 | | 70.3 | 70.3 | 70.3 | 70.3 | 70.3 | 70.3 |
| AO (ex Campine) Blue Star "RO" | | 7.3 | 7.3 | 7.3 | 7.3 | 7.3 | 7.3 |
| HBDC (ex BCL) | | 16.1 | 16.1 | 16.1 | 16.1 | 16.1 | 16.1 |
| EPDM (ex Esso) Vistalon 3708 | | 5.0 | - | - | - | - | - |
| EPDM (ex DSM) Keltan 578 | | - | 5.0 | - | - | - | - |
| EPDM (ex DSM) Keltan 312 | | - | - | 5.0 | - | - | - |
| EPDM (ex DSM) Keltan 520 | | - | - | - | 5.0 | - | - |
| EPDM (ex DSM) 9200-90 | | - | - | - | - | 5.0 | - |
| EPDM (ex DSM) Keltan 314 | | - | - | - | - | - | 5.0 |
| Mixxim T-18 | | 0.2 | 0.2 | 0.2 | 0.2 | 0.2 | 0.2 |
| Mg-Stearate | | 0.5 | 0.5 | 0.5 | 0.5 | 0.5 | 0.5 |
| TGIC (ex Ciba-Geigy) PT 810 | | 0.5 | 0.5 | 0.5 | 0.5 | 0.5 | 0.5 |
| Maleic anhydride | | 0.1 | 0.1 | 0.1 | 0.1 | 0.1 | 0.1 |
| Izod Impact J/m | | 28.2 | 27.6 | 30.4 | 27.4 | 26.7 | 30.2 |
| UL-94 3.2 mm | total flaming time (sec) | 2-6 | 9 | 2 | 2 | 4-10 | 3-9 |
| | max flaming time (sec) | 1-2 | 4 | 1 | 1 | 1-6 | 1-6 |
| | number of spec. igniting cotton | 0 | 0 | 0 | 0 | 0 | 0 |
| | rating | VO | VO | VO | VO | VO | VO |

## Claims

1. Use of an ethylene-propylene-diene terpolymer as a flame retardant enhancer for improving the flame retardancy of a polymer other than an ethylene-propylene-diene terpolymer, containing flame retardant additives.

2. Use of an ethylene-propylene-diene terpolymer for restoring flame-retardant properties to a polymer containing flame-retardant and non-flame retardant additives.

3. Use according to claim 1 or 2, wherein the polymer is a styrene-based resin.

4. Use according to claim 3, wherein the polymer is selected from high-impact polystyrene, acrylonitrile-butadiene-styrene, styrene-acrylonitrile, polystyrene or styerene-butadiene rubber.

5. Use according to any one of claims 1 to 4, wherein the flame-retardant additive is selected from hexabromocyclododecane, 1,2-bis(2,4,6-tribromophenoxy) ethane, antimony trioxide, Tetrabromobisphenol A, pentabromobenzyl-acrylate or methacrylate, poly(pentabromobenzyl-acrylate) , tribromostyrene, tribromophenylmaleimide, phenoxy-terminated TBBA carbonate oligomers, TBBA carbonate oligomers, or polybrominated-diphenyl ethers, such as Octa- or Decabromodiphenyl ether.

6. Use according to any one of the preceding claims, wherein the polymer comprises a heat-stabilizer selected from among organotin compounds, glycidyl ethers, phosphorus compounds, esters of phosphorous acid and their mixtures.

## Patentansprüche

1. Verwendung eines Ethylen-Propylen-Dien-Terpolymers als Flammhemmungsverstärker zur Verbesserung des Flammhemmungsvermögens eines anderen Polymers als eines Ethylen-Propylen-Dien-Terpolymers, das flammhemmende Additive enthält.

2. Verwendung eines Ethylen-Propylen-Dien-Terpolymers zur Wiederherstellung flammhemmender Eigenschaften bei einem Polymer, das flammhemmende und nicht-flammhemmende Additive enthält.

3. Verwendung nach Anspruch 1 oder 2, wobei das Polymer ein auf Styrol basierendes Harz ist.

4. Verwendung nach Anspruch 3, wobei das Polymer aus hochschlagfestem Polystyrol, Acrylnitril-Butadien-Styrol, Styrol-Acrylnitril, Polystyrol oder Styrol-Butadien-Kautschuk ausgewählt ist.

5. Verwendung nach einem der Ansprüche 1 bis 4, wobei das flammhemmende Additiv aus Hexabromcyclododecan, 1,2-Bis(2,4,6-Tribromphenoxy)ethan, Antimontrioxid, Tetrabrombisphenol A, Pentabrombenzylacrylat oder Methacrylat, Poly(pentabrombenzylacrylat), Tribromstyrol, Tribromphenylmaleimid, phenoxy-endenden TBBA-Carbonat-Oligomeren, TBBA-Carbonat-Oligomeren oder polybromierten Diphenylethern, wie Octa- oder Decabromdiphenylether, ausgewählt ist.

6. Verwendung nach einem der vorhergehenden Ansprüche, wobei das Polymer einen Wärmestabilisator beinhaltet, der unter Organozinn-Verbindungen, Glycidylethern, Phosphor-Verbindungen, Estern von phosphoriger Säure und deren Gemischen ausgewählt ist.

## Revendications

1. Utilisation d'un terpolymère éthylène-propylène-diène en tant qu'agent augmentant l'effet retardateur de flamme pour améliorer l'effet retardateur de flamme d'un polymère autre qu'un terpolymère éthylène-propylène-diène, contenant des additifs à effet retardateur de flamme.

2. Utilisation d'un terpolymère éthylène-propylène-diène pour rétablir des propriétés d'effet retardateur de flamme à un polymère contenant des additifs à effet retardateur de flamme et des additifs à effet non retardateur de flamme.

3. Utilisation selon la revendication 1 ou 2, dans laquelle le polymère est une résine à base de styrène.

4. Utilisation selon la revendication 3, dans laquelle le polymère est choisi parmi le polystyrène à fort impact, le styrène acrylonitrile-butadiène, le styrène-acrylonitrile, le polystyrène ou le caoutchouc styrène-butadiène.

5. Utilisation selon l'une quelconque des revendications 1 à 4, dans laquelle l'additif à effet retardateur de flamme est choisi parmi l'hexabromocyclododécane, l'éthane bis-(tribromo-2,4,6-phénoxy)-1,2, le trioxyde d'antimoine, le Tétrabromobisphénol A, l'acrylate ou le méthacrylate de pentabromobenzyle, le poly(acrylate de pentabromobenzyle), le tribromostyrène, le tribromophénylmaléimide, les oligomères carbonate de TBBA à extrémité phénoxy, les oligomères carbonate de TBBA ou les éthers diphénylepolybrominés tels que l'éther Octa- ou Décabromodiphényle.

6. Utilisation selon l'une quelconque des revendications précédentes, dans laquelle le polymère comprend un agent stabilisant à la chaleur choisi parmi les composés organotins, les éthers de glycidyle, les composés phosphorés, les esters d'acide phosphoreux et leurs mélanges.
